# EUROPÄISCHE PATENTANMELDUNG

(11) **EP 1 036 946 A2**
(43) Veröffentlichungstag der Anmeldung: **20.09.2000**
(21) Anmeldenummer: 00105685.2
(22) Anmeldetag: 17.03.2000
(51) Int. Cl.: F16B 7/04

(54) **Montagesystem**

(30) Priorität: 18.03.1999 DE 19912114
(71) Anmelder: Sekler, Josef, 71272 Renningen (DE)
(72) Erfinder: Sekler, Josef, 71272 Renningen (DE)
(74) Vertreter: Weber, Gerhard

(57) **Zusammenfassung**

Für ein Montagesystem zur Herstellung einer Steckverbindung insbesondere zwischen senkrecht aufeinanderstehenden Rohren, wird eine Verbindung angegeben, welche bei einfach aufgebauten Mitteln leicht herstellbar und in einer bevorzugten Ausführungsform auch wieder zerstörungsfrei lösbar ist. Durch die verdeckt liegenden Verbindungsmittel ergibt sich keine Beeinträchtigung des optischen Erscheinungsbilds.

## Beschreibung

Die Erfindung betrifft ein Montagesystem zur Steckverbindung wenigstens eines Querelements an einer Wandung eines Tragelements.

Derartige Montagesysteme sind insbesondere zum Aufbau von Tragkonstruktionen aus einer Mehrzahl verbundener Elemente von Bedeutung, wobei insbesondere langgestreckte Elemente wie Profilstangen oder Rohre an Knotenpunkten verbunden sind und komplexere Gebilde wie Wände oder gesamte Räume umgebende Rahmenkonstruktionen mit offenen oder durch Platten etc. ausgefüllten Rahmenfeldern zwischen den Elementen bilden.

Die Verbindungen an den Knotenpunkten sollen dabei einfach herstellbar sein und einen stabilen Aufbau gewährleisten.

Ein bekanntes Montagesystem umfaßt Rohre mit außenliegenden Schraubelementen an den Rohrenden und Knotenelemente mit Gewindebohrungen. Die damit herstellbaren Aufbauten sind sehr stabil, durch die Verschraubungen aber aufwendig im Zusammenbau und mit den offenliegenden Knotenelementen häufig aus ästhetischen Gründen unerwünscht.

Montagesysteme mit im Querelement eingeschweißter Gewindeplatte und quer durch das Tragelement eingeführter Befestigungsschraube sind aufwendig im Zusammenbau und wegen des Zugangs zum Schraubenkopf durch das Tragelement nicht hinreichend vielseitig einsetzbar.

Die DE-OS 1 920 785 beschreibt eine Stoßverbindung für Trennwände, Geländer etc., bei welcher eine Halteanordnung aus zwei symmetrischen Verbindungsteilen mit ersten Enden dieser Teile in eine Wandöffnung eines Tragelements eingesetzt sind und diese hintergreifen. Ein quer zum Tragelement ausgerichtetes Rohr ist auf die von dem Tragelelement abstehenden zweiten Enden der Verbindungsteile zum Tragelement hin aufgeschoben. Seitlich durch die Rohrwand eingedrückte Keile spreizen die Verbindungsteile auseinander, die dadurch gegen die Rohrinnenwände gedrückt werden und das Rohr kraftschlüssig klemmend festhalten.

Die DE 28 11 453 A1 zeigt eine Verbindungsanordnung, bei welcher zwei gespreizte Halteschenkel mit ihren ersten Enden in eine Öffnung eingesetzt werden. Bei Zusammendrücken der der Öffnung abgewandten zweiten Enden der Halteschenkel, hintergreifen deren erste Enden die Öffnungsränder und drücken diese elastisch um ein geringes Maß auseinander. Die zusammengedrückten Halteschenkel werden in einen Kanal eines Querbügels eingesetzt und dort zum einen durch die spreizende Kraft des Gegendrucks der Öffnungsränder kraftschlüssig und durch ein mit einer Struktur der Halteelemente korrespondierendes Sperrelement formschlüssig gehalten. Eine ähnliche Vorrichtung ist aus der FR 24 78 229 bekannt.

Aus der EP 570 668 A1 ist ein Montagesystem bekannt, bei welchem in eine Öffnung eines Trägerelements ein Spannschloß eingehängt ist, welches in ein aufgestecktes Querrohr hineinragt und über eine seitliche Öffnung im Querrohr durch Verdrehen eines Exzenters oder dgl. arretierbar und wieder lösbar ist.

Der vorliegenden Erfindung liegt die Aufgabe zugrunde, ein hinsichtlich Aufbau und Handhabung vorteilhaftes Montagesystem anzugeben.

Die Erfindung ist im Patentanspruch 1 beschrieben. Die abhängigen Ansprüche enthalten vorteilhafte Ausgestaltungen und Weiterbildungen der Erfindung.

Die Ausführung des Montagesystems als Steckverbindungssystem zeichnet sich durch die besonders einfache Handhabung beim Herstellen einer Verbindung zwischen einem Tragelement und einem Querelement durch Aufstecken des Querelements auf eine am Tragelement vorbereitete Halteanordnung aus. Die mit der Halteanordnung zusammenwirkende Ankervorrichtung ist innerhalb des Querelements angeordnet und gegen Ausziehen aus dem Querelement gesichert. Das typischerweise rohrförmige Querelement umgreift beim Aufstecken die Haltevorrichtung, so daß die Verbindungselemente nach außen nicht in Erscheinung treten. Im Tragelement ist lediglich eine dem Querelement zuweisende Wandungsöffnung vorzusehen, welche insbesondere auch als Bohrung ausgeführt sein kann. Das erfindungsgemäße Montagesystem ist insbesondere von Vorteil bei runden Rohren als Trag- und/oder Querelemente. Die verdeckten Lagen von Wandöffnung im Tragelement und von Ankervorrichtung im Innern des Querelements machen zusätzliche Nacharbeiten an den sichtbaren Oberflächen der Elemente auch in Einsatzfällen entbehrlich, in denen eine hohe Oberflächenqualität im optischen Erscheinungsbild wichtig ist. Eine Veränderung der Außenfläche des Querelements ist durch den Einsatz der Ankervorrichtung nicht erforderlich.

Die Abstützung des Querelements an der Wandung des Tragelements trägt zum einen zur mechanischen Stabilität der zusammengesetzten Anordnung bei und ergibt zum anderen durch Anpassen des dem Tragelement zugewandten Endes des Querelements an die Form des Tragelements die Möglichkeit, eine Verbindung mit geschlossen erscheinender Oberfläche zu erzielen.

Bei unterschiedlichen Querabmessungen von Tragelement und Querelement ist vorzugsweise das Element mit der größeren Querabmessung senkrecht zu einer von Längsrichtungen von Tragelement und Querelement aufgespannten Ebene als Tragelement hinsichtlich der Steckverbindung eingesetzt, ohne daß hiermit eine Aussage über die Verhältnisse der mechanischen Belastungen oder die Längsausrichtungen der Elemente verknüpft ist. Ein Element kann sowohl an einer Stelle als Querelement und an anderer Stelle als Tragelement wirken.

Die Verbindung ergibt sich in besonders einfacher Weise durch Hintergreifen einer vom Tragelement weg weisenden Gegentfläche der Ankervorrichtung innerhalb des Querelements durch eine dem Tragelement zuweisende Querkante an dem Halteelement der Halteanordnung, wobei das Halteelement unter dem Einfluß einer seitlich wirkenden Spreizkraft steht, welche die Querkante an die Gegenfläche andrückt. Bei einer bevorzugten Ausführung, bei welcher der Gleitweg der Querkante entlang der Gegenfläche schräg gegen die zur Steckrichtung parallele Längsachse geneigt ist, ergibt sich auch bei anfänglich spielbehafteter Verbindung durch Weitergleiten der Querkante entlang der Gegenfläche unter dem Einfluß der quer zur Längsachse wirkenden Spreizkraft bei jeder relativen Bewegung eine automatische Festigung der Verbindung. Die Querkante ist vorzugsweise selbstsichernd an der Gegenfläche gehalten, wofür insbesondere ein steiler Neigungswinkel zwischen der Bewegungsrichtung der Gleitbewegung und der Längsachse zwischen 60° und 85° insbesondere zwischen 70° und 80° vorteilhaft ist.

Die Ankervorrichtung weist zum vereinfachten Aufstecken vorteilhafterweise eine Anlaufschräge auf, welche mit einem geringem Neigungswinkel zwischen 5° und 30°, vorzugsweise zwischen 10° und 20° gegen die Längsachse des Querelements geneigt ist. Die Anlaufschräge ist vorteilhafterweise an demselben Steg ausgebildet wie die Gegenfläche zu der Querkante. Beim Zusammenfügen der Steckverbindung gleitet dann das Halteelement entlang der Anlaufschräge und wird dabei entgegen einer Rückstellkraft zunehmend gespannt. Kurz vor Erreichen der maximalen Stecktiefe erreicht die Querkante den Ansatz der Gegenfläche und bewegt sich unter der Einwirkung der spreizenden Rückstellkraft an der Gegenfläche entlang bis die maximale Einstecktiefe erreicht ist, wobei die Bewegung der Querkante entlang der Gegenfläche durch den steilen Verlauf der Bewegungslinie nur noch einem geringen zusätzlichen Steckweg entspricht.

Vorzugsweise sind Ankervorrichtung und Haltevorrichtung spiegelsymmetrisch bezüglich einer durch die Längsachse des Querelements gehenden Mittelebene, insbesondere einer Ebene, welche zusätzlich durch eine Längsachse des Tragelements geht.

Ein Halteelement der Halteanordnung ist vorzugsweise lediglich in die Wandungsöffnung des Tragelements unter seitlicher Hintergreifung des Öffnungsrandes eingehängt, wobei vorteilhafterweise Anschlagelemente des Halteelements ein tieferes Eintauchen in die Öffnung verhindern. Die Anschlagelemente können in einer vorteilhaften Ausführung in einer vorzugsweise beidseitigen Verbreiterungsstufe des Halteelements an der Außenkante der Wandungsöffnung bestehen. Die Verbreiterungsstufe setzt sich vorteilhafterweise entlang der Außenfläche des Tragelements beidseitig dessen Wandungsöffnung bis zu einer Gesamtbreite des Halteelements fort, welche einem korrespondierenden lichten Innendurchmesser des Querelements entspricht, so daß das aufgesteckte Querelement auf diese Weise gegen ein Verschieben entlang des Tragelements gesichert ist.

In dem Halteelement kann die Querkante beispielsweise beidseitig eines Mittelstegs abgehen oder vorzugsweise Teil der Berandung einer Aussparung im Halteelement, welches dabei vorteilhafterweise als strukturiertes und gebogenes Blechteil ausgeführt ist, ausgebildet sein.

Ein auf die Querkante folgender, vom Tragelement weg weisender Abschnitt des Halteelements ist gemäß einer vorteilhaften Ausführung im Zusammenspiel mit einer seitlichen Öffnung im Querelement zum zerstörungsfreien Lösen der Steckverbindung vorgesehen, indem durch die seitliche Öffnung mittels eines Stiftes oder dgl., welcher auch Teil eines speziellen Werkzeugs sein kann, das Halteelement mit der Querkante entgegen der spreizenden Rückstellkraft gedrückt wird, bis die Querkante des Halteelements über die Gegenfläche der Ankervorrichtung hinaus seitlich weggedrückt ist und das Querelement in Richtung seiner Längsachse abgezogen werden kann. Die seitliche Öffnung im Querelement kann als einfache Bohrung geringen Durchmessers ausgeführt sein und beeinträchtigt das optische Erscheinungsbild kaum oder kann auch in die ästhetische Gestaltung mit einbezogen werden. Die seitliche Öffnung im Querelement, deren Position auf die Dimension des Halteelements abgestimmt und in Höhe der Löseplatte gewählt ist, braucht selbst nicht irgendwelche Haltekräfte abfangen. Die Bohrung kann auch erst nachträglich, wenn Bedarf am Lösen der Verbindung besteht, in das Querelement eingebracht werden.

Eine bevorzugte Ausführungsform sieht vor, die Ankervorrichtung so in dem Querelement gegen Ausziehen zu sichern, daß bei bestehender Verbindung von Tragelement und Querelement die Ausziehsicherung aufgehoben und die-Verbindung durch Ausziehen der noch in Eingriff mit der Halteanordnung befindlichen Ankervorrichtung aus dem Querelement gelöst werden kann. Die Ausziehsicherung liegt während des Zusammenfügens von Halteanordnung und Ankervorrichtung bereits vor, so daß die beschriebenen günstigen Eigenschaften des Montagesystems uneingeschränkt gegeben sind.

Als lösbare Ausziehsicherung kann beispielsweise eine Festlegung der Ankervorrichtung im Querelement mittels eines elastischen Rastelements gegeben sein, welches zur Aufhebung der Ausziehsicherung aus der Rastung gedrückt werden kann.

Bevorzugterweise weist die Ankervorrichtung ein durch einen federnden Steg, eine Federzunge oder sonstiges elastisches Element seitlich in eine Wandöffnung des Querelements einrückendes Rastelement auf, welches zur Aufhebung der Ausziehsicherung nach innen gedrückt werden kann. Das Rastelement kann nach Form der Wandöffnung und/oder nach Oberfläche der Oberfläche des Querelements angepaßt sein.

Eine lösbare Ausziehsicherung kann ferner durch eine Festlegung der Ankervorrichtung mittels eines diese formschlüssig gegen Ausziehen sicherndes nach außen aus dem Querelement entnehmbares Sicherungselement wie z. B. einen Bolzen o. ä. gebildet sein.

Das Halteelement weist gemäß einer vorteilhaften Ausführungsform eine Form auf, welche sich vom Tragelement weg verjüngt, so daß einerseits am Tragelement die Abstützfunktion und die Sicherung gegen ein Verschieben des aufgesteckten Querelements wie bereits beschrieben gegeben ist und andererseits das dem Tragelement abgewandte Ende des Halteelements auch bei einem Querelement mit kreisrundem Querschnitt weit seitlich abspreizbar ist.

Besonders vorteilhaft ist eine Halteanordnung mit zwei spiegelbildlich angeordneten gebogenen Halteelementen, welche in einem Ruhezustand an Fußpunkten im Bereich der Wandungsöffnung des Tragelements entlang der Mittelebene aneinander anliegen und sich in von der Mittelebene weg spreizenden Armen vom Tragelement weg fortsetzen. Durch Zusammendrücken der Arme der Halteelemente zur Mittelebene hin entgegen einer aus den Halteelementen bei deren elastischer Verformung selbst entstehenden Rückstellkraft können die Enden der Halteelemente in eine dem Tragelement zuweisende Öffnung des rohrförmigen Querelements eingeführt werden. Die Spreizung der Halteelemente bei aufgestecktem Querelement zum Eingriff der Querkanten in die Gegenflächen der Ankervorrichtung kann allein durch die Elastizität der Halteelemente erreicht werden.

Bei runden Rohren als Tragelemente ergibt sich eine Sicherung des Querelements gegen Verdrehen oder seitliches Verschieben bereits mit hoher Stabilität aus einer der Form des Tragelements angepaßten Formung des dem Tragelement zugewandten Endes des Querelements. Eine zusätzliche oder insbesondere bei flachen Anlageflächen des Tragelements wirksame Sicherung kann beispielsweise vorsehen, daß in die Wandung des Tragelements weitere Öffnungen eingebracht sind, in welche Sicherungselemente, welche in dem Querelement befestigt sind und über dieses in Richtung des Tragelements hinausragen, beim Zusammenstecken eingreifen. In einer vorteilhaften Ausführungsform sind diese Sicherungselemente einfache Verlängerungen der Ankervorrichtung, insbesondere von Stegen einer solchen Ankervorrichtung über das Ende des Querelements hinaus.

Dadurch, daß zum Einsetzen der Halteelemente in die Wandöffnung des Tragelements kein weiterer Zugriff ins Innere des Tragelements erforderlich ist, können auch mehrere Querelemente auf gleicher Höhe des Tragelements an verschiedenen, insbesondere auch gegenüberliegenden Umfangspositionen angesetzt werden.

Die Erfindung ist nachfolgend anhand bevorzugter Ausführungsbeispiele unter Bezugnahme auf die Abbildungen noch eingehend veranschaulicht. Dabei zeigt
- Fig. 1: ein Halteelement in Seitenansicht und Draufsicht.
- Fig. 2: ein Tragelement mit einzuhängenden Halteelementen.
- Fig. 3: ein Tragelement mit eingehängten Halteelementen und ein aufzusteckendes Querelement.
- Fig. 4: eine nach Fig. 3 hergestellte Verbindung.
- Fig. 5: die Verbindung nach Fig. 4 in anderer Schnittansicht.
- Fig. 6: eine alternative Ausführung von Halteanordnung und Ankervorrichtung.
- Fig. 7: eine Verbindung mit mehrfacher Halteanordnung
- Fig. 8: eine bevorzugte Ausführungsform einer Ankervorrichtung
- Fig. 9: Querelement und Halteanordnung mit einer Ankervorrichtung nach Fig. 8

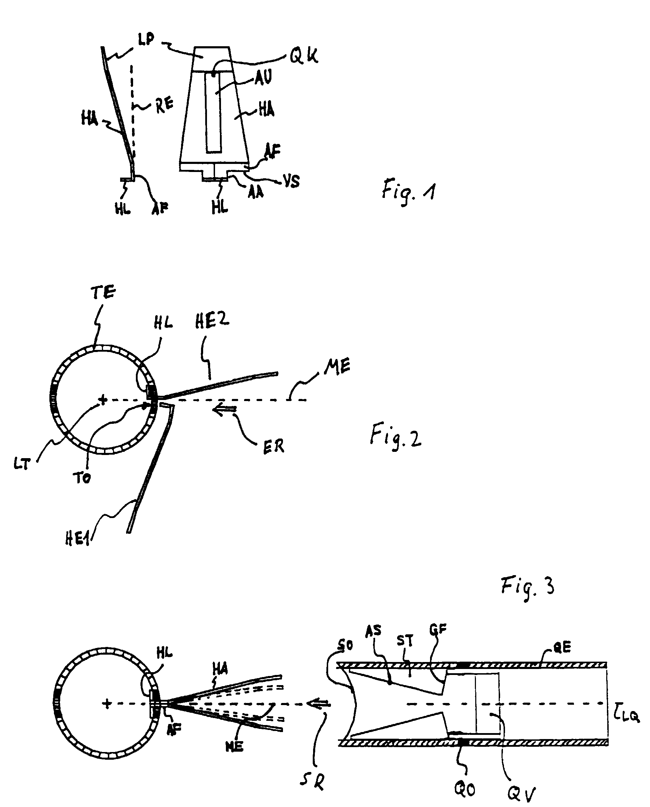

Das in Fig. 1 in Seitenansicht (A) und Draufsicht (B) skizzierte bevorzugte Halteelement ist als strukturiertes und gebogenes Blechteil ausgeführt und damit besonders kostengünstig in der Herstellung. Das Blechteil kann nachträglich gehärtet sein.

In der Seitenansicht (A) des Blechteils ist zu Erläuterungszwecken eine Referenzebene RE eingeführt, welche in den nachfolgend skizzierten Anordnungen mit einer Symmetrie-Mittelebene zusammenfällt.

Das skizzierte Halteelement weist eine gegen die Referenzebene RE im wesentlichen senkrecht abgekantete Haltelasche HL auf, welche in die Wandungsöffnung eines Tragelements eingeführt wird und dort den Rand der Öffnung hintergreift. Nach einem kurzen, im wesentlichen in der Referenzebene liegenden Ansatzlaschen-Abschnitt AA, welcher im zusammengesetzten Zustand durch die Wandungsöffnung des Tragelements ragt, folgt eine Verbreiterungsstufe VS, in welcher sich die Querabmessung des Halteelements wesentlich erhöht. Auf einem ersten kurzen Abschnitt nach der Verbreiterungsstufe verläuft das Halteelement mit einer Abstützfläche AF noch im wesentlichen in der Referenzebene, um dann mit einem längeren Haltearm-Abschnitt HA von dieser Referenzebene wegzuführen. Wie aus der Draufsichtskizze ersichtlich ist, verjüngt sich das Halteelement im Verlauf des Haltearms in seinen Querabmessungen. Im Verlauf des Haltearms HA weist das Halteelement eine längliche, mittig angeordnete Aussparung AU auf, welche an ihrem der Haltelasche HL und damit dem Tragelement abgewandten Ende durch eine Querkante QK abgeschlossen ist. Der abschließende Teil des Halteelements nach der Aussparung ist als Löseplatte LP bezeichnet und kann am Ende wieder eine leichte Umbiegung in Richtung der Referenzebene aufweisen. Die Funktion des Halteelements und dessen einzelner Abschnitte wird anhand der weiteren Abbildungen noch eingehend veranschaulicht.

In Fig. 2 ist mit Blickrichtung in Längsachse LA eines als kreisrundes Rohr ausgeführten Tragelements TE in der Wandung des Tragelements eine Öffnung TO gezeigt, welche vorteilhafterweise als Bohrung ausgeführt und dadurch einfach herzustellen ist. Ein erstes Halteelement HE1 weist mit seiner Haltelasche in Einführrichtung ER auf die Öffnung TO und kann in dieser Ausrichtung mit der Haltelasche, welche hierzu vorteilhafterweise geringfügig schmaler ist als der Druchmesser der Öffnung TO, in die Wandungsöffnung eingeführt werden.

Nach Einführen der Haltelasche in die Wandungsöffnung wird das Halteelement geschwenkt, so daß die Haltelasche die Wandungsöffnung hintergreift und die Ansatzlasche in die Öffnung einrückt. Beim Verschwenken legt sich die Haltelasche an die Innenwand des Tragelements und die Verbreiterungsstufe VS an die Außenwand. Ein spiegelbildlich zu HE1 eingesetztes zweites Halteelement HE2 ist in dieser geschwenkten Position skizziert.

In Fig. 3 sind zwei Halteelemente in spiegelsymmetrischer Anordnung in die Wandungsöffnung des Tragelements eingesetzt und liegen mit ihren Abstützflächen aneinander an, wobei sich die Haltearme von einer Mittelebene ME abspreizen. Die Haltearme HA können unter elastischer Deformation in Richtung der Mittelebene zusammengedrückt werden. Eine solche Position mit reduzierter Spreizweite der Haltearme ist mit unterbrochener Linie eingezeichnet. Ein Auseinanderklaffen der Halteelemente im Bereich der Ansatzlaschen AL wird durch deren enge Einpassung in die Wandungsöffnung TO des Tragelements vermieden oder zumindest gering gehalten.

Durch das Zusammendrücken der Haltearme, wobei auch ein Hilfsmittel wie eine Klammer oder dgl. zum Halten in der zusammengedrückten Position eingesetzt werden kann, wird die Spreizweite der Haltearme auf einen Wert reduziert, der geringer ist, als die lichte Weite der dem Tragelement zugewandten Öffnung SO eines Querelements QE, so daß diese Öffnung des Querelements über die Halteelemente in Steckrichtung SR geschoben werden kann.

Die Enden der Haltearme gleiten dann entlang von Anlaufschrägen AS von Ankerstegen ST einer Ankervorrichtung innerhalb des Querelements QE, welches beispielsweise wieder als kreisrundes Rohr mit einer Längsachse LQ ausgeführt sein kann, und werden dabei weiter in Richtung der Mittelebene elastisch zusammengedrückt. Das Gleiten der Enden der Haltearme HA entlang der Anlaufschrägen AS wird begünstigt durch in Richtung der Mittelebene umgebogene äußerste Enden der Haltearme.

Die Aussparungen AU in den Halteelementen liegen in derselben Ebene wie die Ankerstege ST. Die Ankerstege weisen neben den in Richtung vom Tragelement weg von der Innenwandung des Querelements zur Längsachse hin flach ansteigenden Anlaufschrägen steil zur Innenwand des Querelements abfallende Gegenflächen GF und Scheitelpunkte beim Übergang von den Anlaufschrägen zu den Gegenflächen auf. Wenn das Querelement so weit in Richtung des Tragelements aufgesteckt ist, daß die Querkanten QK der Aussparungen AU die Scheitelpunkte der Stege überschreiten, werden die Haltearme durch ihre elastische Rückstellkraft auseinandergedrückt und die Querkanten QK bewegen sich entlang der Gegenflächen GF unter Aufspreizung der Halteelemente, bis das Querelement an dem Tragelement anstößt.

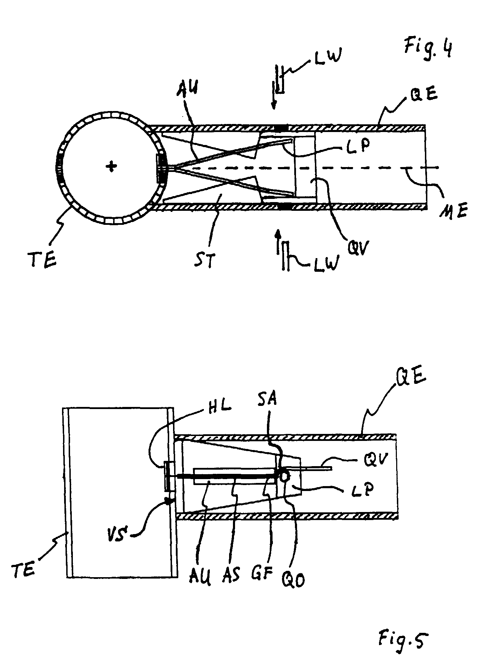

Die Fig. 4 zeigt eine auf diese Art zustande gekommene Verbindung eines Tragelements mit einem Querelement. Durch die Steilheit der Gegenflächen gegen die Längsachse LQ des Querelements, ergibt sich eine hohe Sicherheit gegen Abziehen des Querelements, insbesondere bei scharfkantiger Ausführung der Querkanten, welche sich dann bei Abziehkräften in die Gegenflächen einschneiden und ein Rückgleiten verhindern.

Die Verbindung kann andererseits zerstörungsfrei auf einfache Weise gelöst werden, wenn in Richtung vom Tragelement weg hinter den Gegenflächen in der Wandung des Querelements Öffnungen QO vorgesehen werden, durch welche mittels stiftförmiger Hilfsmittel LW, welche auch Bestandteil einer speziellen Lösezange sein können, seitlicher Druck auf die auf die Querkanten folgenden Löseplatten der Halteelemente ausgeübt werden kann. Dabei werden die Haltearme HA wieder zur Längsachse hin zusammengedrückt und die Querkanten von den Gegenflächen abgehoben, so daß das Querelement einfach abgezogen werden kann.

Die Stege ST der Ankervorrichtung im Querelement sind vorteilhafterweise durch eine von den Gegenflächen beabstandete Querverbindung QV innerhalb des Querelements verbunden, so daß beide Stege beim Einsatz in das Querelement gemeinsam gehandhabt, insbesondere gemeinsam präzis positioniert werden können. Die Ankervorrichtung mit den Stegen und der Querverbindung ist vorzugsweise als strukturiertes Blechteil ausgebildet, welches, eventuell leicht selbstklemmend, in das Querelement eingeschoben und dort festgelegt, vorzugsweise verschweißt wird.

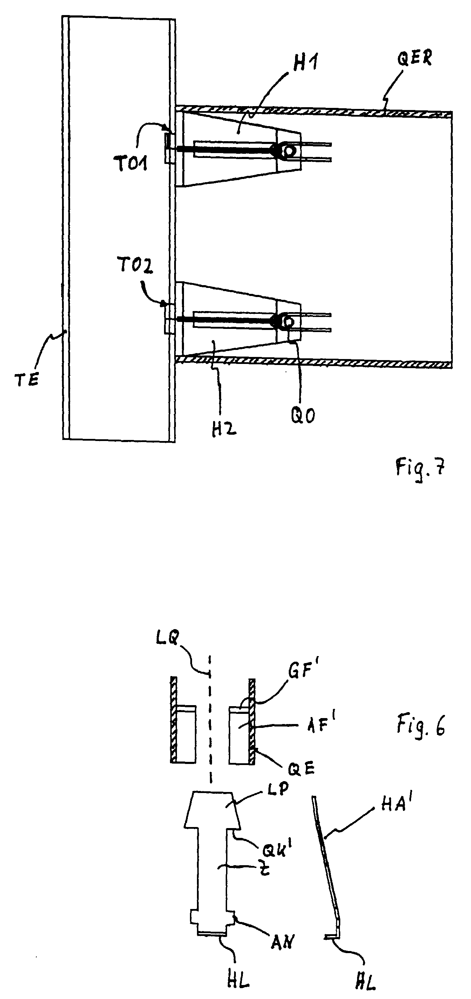

Die Ankervorrichtung weist vorteilhafterweise wie aus der Fig. 5, welche die Verbindung der Fig. 4 in einer Schnittdarstellung entlang der Mittelebene ME zeigt, ersichtlich in ihrem Verlauf nach den Gegenflächen GF eine Stufe SA auf. Diese Stufe SA kann beim Einsetzen der Ankervorrichtung in das Querelement QE in Anschlag gebracht werden an einen durch eine oder gegenüberliegende Öffnungen QO in der Wandung des Querelements eingeführtes stiftförmiges oder bolzenförmiges Positionierelement. Hierdurch kann auf einfache Weise eine definierte Position der Ankervorrichtung sowohl in Richtung der Längsachse LQ als auch hinsichtlich der Winkellage um die Längsachse erreicht werden. Die Abstufung der Ankervorrichtung ermöglicht zum anderen einen sicheren Zugang zu den Löseplatten der eingerasteten Halteelemente über die Öffnungen QO wie bereits beschrieben.

Aus Fig. 5 ist auch die Wirkung der Verbreiterungsstufe VS der Halteelemente ersichtlich, welche sich zum einen an die Außenfläche des Tragelements anlegt und zum andern die lichte Weite des Ansatzes des Querelements an dem Tragelement im wesentlichen ausfüllt und damit ein Verschieben des Querelements entlang des Tragelements in der Zeichenebene der Fig. 5 verhindert.

In Fig. 6 ist eine Ausführung skizziert, bei welcher ein Halteelement HE von der Haltelasche HL sich in einem Zungenabschnitt Z im wesentlichen konstanter Breite bis zu der Querkante QK erstreckt. Die Querkante liegt in diesem Fall beidseitig symmetrisch zu der Zunge Z. Das Halteelement setzt sich hinter der Querkante QK wieder in einer Löseplatte LP fort und kann dort auch wieder verjüngt zulaufend geformt sein. Die korrespondierende Ankervorrichtung weist dann zwei symmetrisch zur Längsachse LQ des Querelements QE liegende Keile oder Stege mit jeweils einer Anlaufschräge AS und einer Gegenfläche GF auf, welche seitlich voneinander beabstandet sind und die Zunge Z zwischen sich aufnehmen können. An der Zunge können zusätzlich Anschlagnoppen als Anschläge gegen weiteres Eintauchen in die Wandungsöffnung des Tragelements vorgesehen sein. Das Halteelement zeigt wieder in der Seitenansicht (B) die Biegung mit von einer Referenzebene wegführendem Haltearm HA.

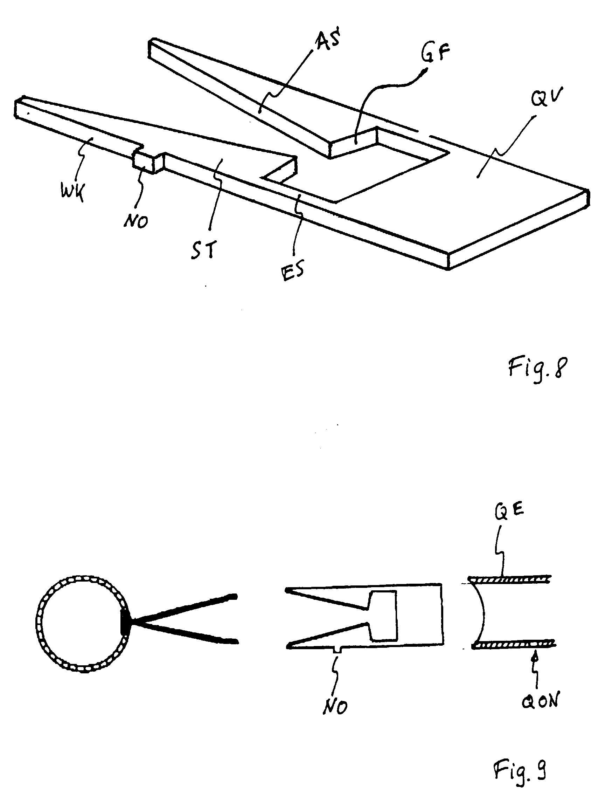

Bei der in Fig. 7 skizzierten Anordnung ist ein Querelement QER skizziert, welches in Längsrichtung des Tragelements TE eine vergleichsweise große Ausdehnung aufweist und beispielsweise einen rechteckigen Querschnitt besitzt. Bei dieser Anordnung ist das Querelement über zwei in Längsrichtung des Tragelements beabstandet in zwei Öffnungen TO1 bzw. TO2 der Tragelementwandung eingesetzte Halteanordnungen H1 und H2 gehalten, deren Verbindungen wieder über Öffnungen QO im Querelement QER lösbar sind.

In Fig. 8 ist in schrägperspektivischer Ansicht eine bevorzugte Auführungsform einer Ankervorrichtung skizziert, welche in Übereinstimmung mit den in Fig. 3 bis Fig. 5 skizzierten Ankervorrichtungen zwei einander gegenüberstehende Ankerstege ST mit Anlaufschrägen AS und Gegenflächen GF aufweist. Die beiden Ankerstege ST sind über Längsstege mit einer Platte QV verbunden. Die Ankerstege liegen in dem Querelement mit ihren bezüglich der Längsachse des Querelements radial nach außen weisenden Wandkanten an der Innenwand des Querelements an und stützen sich dort gegen die Spreizkraft der Halteanordnung ab. Die Besonderheit der in Fig. 8 skizzierten Ankervorrichtung besteht darin, daß diese an wenigstens einem der Ankerstege einen über die Wandkante radial überstehenden Nocken NO aufweist. Beim Einsetzen der Ankervorrichtung in das Querelement wird der Ankersteg durch federnd elastische Verformung des Verbindungsstegs ES radial nach innen gedrückt und der Nocken NO gleitet entlang der Innenwand des Querelements bis zu einer Öffnung ON in der Wand des Querelements und rastet unter der den Ankersteg radial nachaußen drückenden Federkraft des Verbindungsstegs ES in die Öffnung ein (Fig. 9). Der Nocken NO kann auch an anderer Position federnd nachgebend angeordnet sein.

Die Halteanordnung wird in der bereits beschriebenen Weise in das Tragelement eingehängt und über die Ankerstege in das Querelement eingesteckt. Gegen ein Ausziehen der Ankervorrichtung aus dem Querelement wirkt der Nocken NO in der Wandöffnung ON. Die Verbindung kann auf einfache Weise dadurch gelöst werden, daß der Nocken durch radial nach innen gerichtete Kraft aus seinem Eingriff in die Öffnung ON gelöst und die gesamte Ankervorrichtung aus dem Querelement herausgezogen wird.

Die in Fig. 8 skizzierte bevorzugte Ankervorrichtung ist vorteilhafterweise vollständig als ebenes Blechteil herstellbar und härtbar. Im Querelement ist lediglich die Öffnung ON in die Wandung einzubringen.

Die vorstehend und in den Ansprüchen angegebenen Merkmale sind sowohl einzeln als auch in verschiedenen Kombinationen vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Montagesystem zur Steckverbindung wenigstens eines Querelements an einer Wandung eines Tragelements mit folgenden Merkmalen:
a) die Wandung des Tragelements weist dem Querelement zuweisend eine Öffnung auf;
b) der dem Tragelement zuweisende Ansatz des Querelements stützt sich an der Wandung des Tragelements ab;
c) eine Halteanordnung ist einerseits in die Öffnung der Tragelementwandung diese hintergreifend eingesetzt und ragt andererseits in das Querelement hinein;
d) die Halteanordnung weist wenigstens ein entgegen einer in Richtung einer Seitenwand des Querelements wirkenden Spreizkraft gespanntes Halteelement auf, welches mit einer dem Tragelement zuweisenden Querkante an einer Gegenfläche einer Ankervorrichtung anliegt, die in dem Querelement befestigt und gegen die Spreizkraft abgestützt ist.

2. Montagesystem nach Anspruch 1, dadurch gekennzeichnet, daß die Querkante Teil einer Aussparung in dem Halteelement ist.

3. Montagesystem nach Anspruch 1 oder 2, dadurch gekennzeichnet, daß das Halteelement nach der Querkante von dem Tragelement abgewandt sich in einer Löseplatte fortsetzt und daß das Querelement wenigstens eine Wandungsöffnung bei der Position der Löseplatte aufweist.

4. Montagesystem nach einem der Ansprüche 1 bis 3, dadurch gekennzeichnet, daß das Halteelement an der Wandung des Tragelements eine Breite gleich der lichten Weite des Querelements an dieser Stelle aufweist.

5. Montagesystem nach einem der Ansprüche 1 bis 4, dadurch gekennzeichnet, daß das Halteelement sich vom Tragelement weg verjüngt.

6. Montagesystem nach einem der Ansprüche 1 bis 5, dadurch gekennzeichnet, daß das Halteelement als Blechteil ausgeführt ist.

7. Montagesystem nach einem der Ansprüche 1 bis 6, dadurch gekennzeichnet, daß die Halteanordnung zwei spiegelsymmetrisch angeordnete Halteelemente enthält.

8. Montagesystem nach Anspruch 7, dadurch gekennzeichnet, daß die beiden Halteelemente bei dem Tragelement aneinander anliegen und die vom Tragelement in das Querelement hineinweisenden Arme der Halteelemente unter elastischer Verformung gegeneinander drückbar sind.

9. Montagesysteme nach einem der Ansprüche 1 bis 8, dadurch gekennzeichnet, daß die Ankervorrichtung wenigstens einen von der Innenwand des Querelements abstehenden Steg aufweist, an welchem die Gegenfläche als eine dem Tragelement abgewandte Gegenkante ausgeführt ist.

10. Montagesystem nach Anspruch 9, dadurch gekennzeichnet, daß die Gegenkante gegen die Längsachse des Querelements geneigt ist.

11. Montagesystem nach Anspruch 10, dadurch gekennzeichnet, daß der Winkel der Gegenkante gegen die Längsachse zwischen 60° und 90°, insbesondere zwischen 70° und 80° liegt.

12. Montagesystem nach einem der Ansprüche 1 bis 11, dadurch gekennzeichnet, daß die Ankervorrichtung eine dem Tragelement zugewandte Anlaufschräge aufweist.

13. Montagesystem nach einem der Ansprüche 1 bis 12, dadurch gekennzeichnet, daß die Ankervorrichtung symmetrisch bezüglich einer durch die Längsachse gehenden Mittelebene ist.

14. Montagesystem nach einem der Ansprüche 9 bis 13, dadurch gekennzeichnet, daß die Ankervorrichtung als symmetrischer Doppelsteg mit dem Tragelement abgewandter Querverbindung der beiden Stege ausgeführt ist.

15. Montagesystem nach einem der Ansprüche 1 bis 14, dadurch gekennzeichnet, daß die Ankervorrichtung beim Zusammenfügen von Tragelement und Querelement gegen Verschieben in Steckrichtung und gegen Ausziehen gesichert ist und die Ausziehsicherung bei bestehender Verbindung von Tragelement und Querelement lösbar ist.

16. Montagesystem nach Anspruch 15, dadurch gekennzeichnet, daß ein die Ankervorrichtung in dem Querelement gegen Ausziehen sicherndes Verriegelungselement von außen entriegelbar ist.

17. Montagesystem nach Anspruch 16, dadurch gekennzeichnet, daß das Verriegelungselement in eine Seitenöffnung des Querelements einrastet und zur Entriegelung elastisch nach innen drückbar ist.

18. Montagesystem nach einem der Ansprüche 1 bis 17, dadurch gekennzeichnet, daß die Ankervorrichtung als Blechteil ausgebildet ist.

19. Montagesystem nach einem der Ansprüche 1 bis 18, dadurch gekennzeichnet, daß die Ankervorrichtung in das Querelement eingeschweißt ist.

20. Montagesystem nach einem der Ansprüche 1 bis 19, gekennzeichnet durch zusätzliche Sicherungsöffnungen in der dem Querelement zugewandten Wandungsfläche des Tragelements und durch aus dem Querelement in Steckrichtung hinausragende Sicherungselemente, welche in die Sicherungsöffnungen eingreifen.

21. Montagesystem nach Anspruch 20, dadurch gekennzeichnet, daß die Sicherungselemente Verlängerungen der Ankervorrichtung sind.
